# EUROPEAN PATENT SPECIFICATION

(11) **EP 4 385 629 B1**
(45) Date of publication and mention of the grant of the patent: **25.02.2026**
(21) Application number: 23820003.4
(22) Date of filing: 11.05.2023
(51) Int. Cl.: B05C 5/02, B05C 11/10, H01M 4/04

(54) **OFFSET ADJUSTING DEVICE AND COATING APPARATUS INCLUDING THE SAME**
OFFSET-EINSTELLVORRICHTUNG UND BESCHICHTUNGSVORRICHTUNG DAMIT
DISPOSITIF DE RÉGLAGE DE DÉCALAGE ET DISPOSITIF DE REVÊTEMENT LE COMPRENANT

(30) Priority: 08.06.2022 KR 20220069479
(43) Date of publication of application: 19.06.2024
(73) Proprietor: LG Energy Solution, Ltd., Seoul 07335 (KR)
(72) Inventor: HONG, Seong-Wook, Daejeon 34122 (KR); LEE, Chang-Hun, Daejeon 34122 (KR); SONG, Dong-Hun, Daejeon 34122 (KR); JEON, Shin-Wook, Daejeon 34122 (KR); CHOY, Sang-Hoon, Daejeon 34122 (KR)
(74) Representative: Plasseraud IP
(86) International application number: PCT/KR2023/006443
(87) International publication number: WO 2023/239067

(56) References cited:
- CN-U- 211 989 448
- CN-U- 212 136 588
- CN-U- 215 235 451
- CN-U- 215 235 451
- JP-A- 2019 111 470
- JP-A- 2020 131 084
- JP-B2- 6 936 139
- KR-A- 20130 098 758

## Description

### TECHNICAL FIELD

The present application claims priority to Korean Patent Application No. 10-2022-0069479 filed on June 8, 2022 in the Republic of Korea.

The present disclosure relates to an offset adjusting device and a coating apparatus including the same, and more particularly, to an offset adjusting device configured to stably adjust an offset between components of a coating agent applying device for discharging a coating agent, and a coating apparatus including the same.

### BACKGROUND ART

As technology development and demand for mobile devices increase, the demand for secondary batteries as an energy source is rapidly increasing, and these secondary batteries necessarily include an electrode assembly that is a power generation element.

Such an electrode assembly may be formed in a predetermined shape by first preparing a positive electrode and a negative electrode by applying an electrode active material slurry to a positive electrode current collector and a negative electrode current collector, and then stacking them on both sides of the separator. Also, the aforementioned secondary battery may be formed by accommodating the electrode assembly in a battery case and sealing after injection of electrolyte.

In order to uniformly charge and discharge characteristics of the secondary battery, this electrode active material slurry should be evenly coated on the positive electrode current collector or negative electrode current collector. At this time, by using a coating apparatus composed of a slot die through which a coating agent such as an electrode active material slurry is discharged and a coating roll capable of driving a substrate such as a positive electrode current collector or a negative electrode current collector, the positive electrode current collector or the negative electrode current collector is coated. The coating apparatus applies a coating agent to one side or both sides of a substrate while rotating a coating roll, and then dries the substrate coated with the coating agent. Also, a spacer may be provided in the slot die, and the spacer may adjust a width at which the coating agent is discharged from the slot die.

In the case of such a coating apparatus, when the offset between the die lip, which is the tip of the slot die, and the spacer is changed along the longitudinal direction of the slot die due to poor alignment of the spacer, the deviation of the left and right discharge width of the coating agent from the slot die can be increased. In addition, if the spacer is aligned to have a larger offset than the set offset, there is a problem that the coating width difference occurs due to the coating interface defect.

In order to solve this problem, in the conventional coating apparatus, the offset is adjusted by pulling the spacer to the opposite side of the die lip using a block. However, in this case, it is difficult to quantitatively measure the offset, and there is a problem in that the alignment of the spacer is not accurately performed when the operator's skill level is low.

JP2020 131084 relates to a coating device capable of adjusting a position of a shim laterally and up and down. CN215235451U relates to a die head gasket adjusting device and a coating die head. JP 6 936139 relates to a coating device that coats a web with a coating liquid.

### DISCLOSURE

### Technical Problem

The present disclosure is designed to solve the problems of the related art, and therefore the present disclosure is directed to providing an offset adjusting device capable of stably adjusting an offset between components of a coating agent applying device for discharging a coating agent, and a coating apparatus including the same.

However, the technical problem to be solved by the present disclosure is not limited to the above-mentioned problems, and other problems not mentioned will be clearly understood by those skilled in the art from the description below.

### Technical Solution

In one aspect of the present disclosure, there is provided an offset adjusting device, which is configured for aligning a spacer provided in a slot die of a coating agent applying device configured to apply a coating agent to a substrate, the offset adjusting device comprising: an offset measuring module configured to measure an offset between a die lip of the slot die and the spacer; and an offset adjusting module coupled to the spacer and configured to align the spacer according to the measured offset.

In an embodiment, the offset adjusting device may be configured to be coupled to one side of the slot die located on the opposite side of the die lip in a discharging direction of the coating agent.

In an embodiment, the offset measuring module may include a support bracket provided to the slot die; and an indicator supported by the support bracket and configured to measure the offset by contacting the slot die and the spacer.

The offset adjusting module includes a support unit provided on the slot die; and a moving stage unit supported by the support unit and configured to align the spacer according to the movement in a discharging direction of the coating agent.

The offset adjusting module further includes an offset adjusting guide unit provided on the moving stage unit and coupled to the spacer; and a control unit configured to control the driving of the moving stage unit in the discharging direction of the coating agent.

In an embodiment, the spacer may include a hole in a portion formed by protruding outward from the slot die, and the offset adjusting guide unit may be configured to be coupled to the hole of the spacer.

The moving stage unit includes a first block coupled to the support unit; a second block coupled to an upper portion of the first block and configured to move in the discharging direction of the coating agent according to driving of the control unit; and a connection unit coupled to the control unit and configured to connect the second block and the control unit, and the offset adjusting guide unit is provided on an upper portion of the second block.

In an embodiment, the second block may include an insert portion formed at a bottom to protrude inward in a horizontal direction and configured to be inserted into a top of the first block, the first block may include an indent portion formed at a top by indenting inward in the horizontal direction and configured to accommodate the insert portion, and the indent portion may be configured to guide the movement of the second block in the discharging direction of the coating agent according to the driving of the control unit.

In an embodiment, the offset adjusting module may further include a protrusion member formed to protrude from the side of the second block; and a movement limiting unit having a guide hole configured to guide the movement of the protrusion member in the discharging direction of the coating agent and fixed to the first block, and the protrusion member may be configured to limit the movement in the discharging direction of the coating agent by coming into contact with one end or the other end of the guide hole.

In an embodiment, the offset adjusting device may further comprise a fixing member configured to fix the offset adjusting device to one side of the slot die.

In an embodiment, the offset adjusting device may be provided in plurality in a longitudinal direction of the slot die.

In an embodiment, the plurality of offset adjusting devices may be provided on both sides of the center in the longitudinal direction of the slot die along the longitudinal direction of the slot die.

In an embodiment, the plurality of offset adjusting devices may be provided symmetrically in the longitudinal direction of the slot die based on the center in the longitudinal direction of the slot die.

In an embodiment, the distance between the plurality of offset adjusting devices may be configured to be adjustable from each other.

In addition, a coating apparatus according to another aspect of the present disclosure in order to accomplish the above object comprises an offset adjusting device as described above; and a coating agent applying device configured to apply a coating agent to a substrate.

### Advantageous Effects

According to this embodiment of the present disclosure, the offset between the die lip of the slot die and the spacer can be quantitatively measured. Also, the offset can be measured in real time. In addition, since the spacer can be aligned through the offset adjusting module coupled to the spacer according to the measured offset, there is an advantage in that the spacer can be more finely aligned. Accordingly, it is possible to minimize left and right alignment deviation of the spacer, and a deviation of left and right discharge width of the coating agent from the slot die can be minimized. Therefore, through the unification of the left and right offsets, the pattern width of each lane can be made uniform when multi-lane coating is performed on the substrate.

In addition, since the offset adjusting module and the spacer can be stably connected, more accurate alignment of the spacer in the discharging direction of the coating agent may be possible.

In addition, since the spacer is connected to the offset adjusting module, it is possible to minimize the misalignment of the aligned state of the spacer even when the first die and the second die that may be included in the slot die are coupled again after aligning the spacer.

In addition, if it is confirmed that the spacer is aligned to have a larger offset than the set offset, the offset can be adjusted easily by manipulation, so that the problem of coating width differences due to coating interface defects can be more easily solved.

In addition, various additional effects may be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing the overall shape of a coating apparatus according to an embodiment of the present disclosure.
FIG. 2 is a view showing the coating apparatus of FIG. 1 from the front.
FIG. 3 is a view showing the coating apparatus of FIG. 1 from above.
FIG. 4 is a view showing a part of the coating apparatus of FIG. 1 from above.
FIG. 5 is a view showing the coating apparatus of FIG. 1 from the side.
FIG. 6 is a view showing an offset adjusting device provided in the coating apparatus of FIG. 1 in detail.
FIG. 7 is a view showing an offset adjusting module provided in the offset adjusting device of FIG. 6 in detail.
FIG. 8 is an exploded perspective view of the offset adjusting module of FIG. 7.
FIG. 9 is a view showing a part of the offset adjusting module of FIG. 7.
FIG. 10 is a view showing another part of the offset adjusting module of FIG. 7.
FIG. 11 is a view showing a state in which the offset adjusting module of FIG. 7 aligns the spacer.
FIG. 12 is a diagram showing an offset adjusting device according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

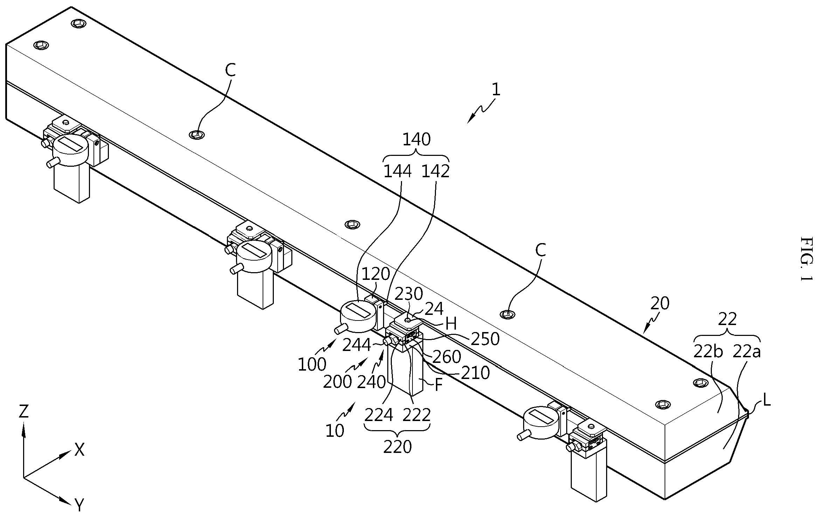

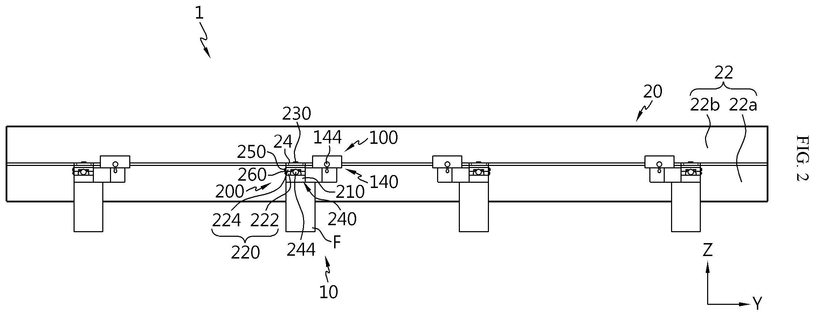

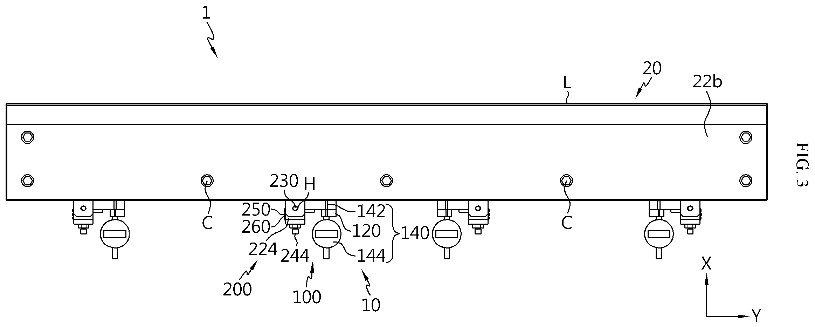

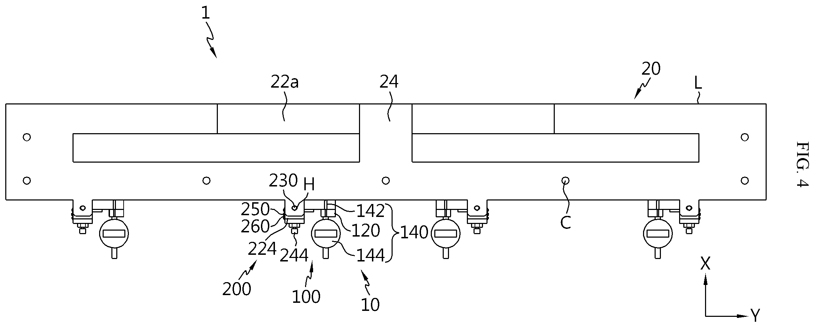

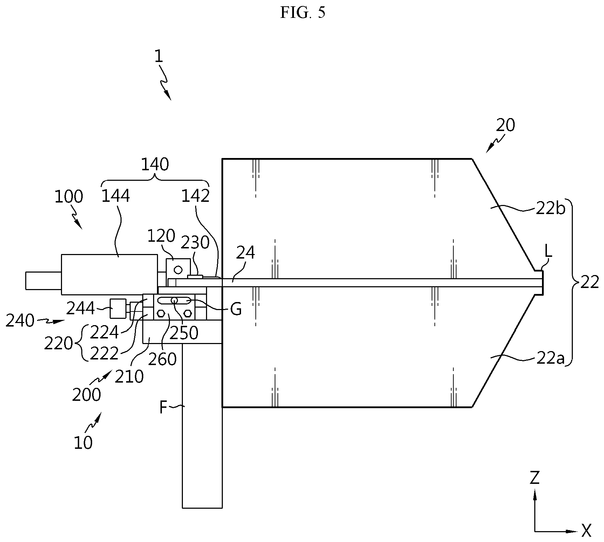

FIG. 1 is a diagram showing the overall shape of a coating apparatus 1 according to an embodiment of the present disclosure, FIG. 2 is a view showing the coating apparatus 1 of FIG. 1 from the front, FIG. 3 is a view showing the coating apparatus 1 of FIG. 1 from above, FIG. 4 is a view showing a part of the coating apparatus 1 of FIG. 1 from above, and FIG. 5 is a view showing the coating apparatus 1 of FIG. 1 from the side.

In the embodiment of the present disclosure, the X-axis direction shown in the figure may mean a discharging direction of a coating agent, the Y-axis direction may mean a longitudinal direction of the slot die 22 perpendicular to the X-axis direction on the horizontal plane (XY plane), and the Z-axis direction may mean a vertical direction perpendicular to both the X-axis direction and the Y-axis direction.

Referring to FIGS. 1 to 5, the coating apparatus 1 according to an embodiment of the present disclosure may include an offset adjusting device 10 and a coating agent applying device 20.

The offset adjusting device 10 may be configured to adjust an offset between components of the coating agent applying device 20.

The coating agent applying device 20 may include a slot die 22 and a spacer 24.

The slot die 22 may be configured to apply a coating agent (not shown) to a substrate (not shown). For example, the slot die 22 may eject the coating agent to the outside through a discharge port formed in a slot shape. The slot die 22 may form a coating layer by applying the coating agent on the substrate. In addition, the slot die 22 may be connected to an external coating agent supply device (not shown) to receive a coating agent.

The substrate may be supplied to be wound on a coating roll (not shown). Such a substrate may be a current collector for forming an electrode (a positive electrode or a negative electrode) of a secondary battery, but is not limited thereto. As another example, the substrate may be a substrate for manufacturing other components of a secondary battery, such as a separator fabric for manufacturing a separator coated with a coating slurry in which a polymer binder, a dispersant and a heat-resistant filler are mixed on one or both sides of the separator fabric, or other substrates for fabricating other components where the coating layer is formed on another substrate. Also, the coating agent may be a coating material applied to the substrate. For example, the coating agent may be a positive electrode active material slurry applied to a positive electrode current collector.

Specifically, the aforementioned slot die 22 may include a first die 22a and a second die 22b.

The first die 22a may be formed in a substantially hexahedral shape. In addition, a space for storing the coating agent supplied from the coating agent supply device may be formed inside the first die 22a.

The second die 22b may be formed in a substantially hexahedral shape and disposed to face the first die 22a in a vertical direction. As an example, the second die 22b may be disposed on the first die 22a.

The spacer 24 may be provided in the slot die 22. The spacer 24 may be configured to adjust a width at which the coating agent is discharged from the slot die 22. Specifically, the spacer 24 may be disposed between the first die 22a and the second die 22b in a vertical direction. As an example, the spacer 24 may be formed in an approximate '⊂' shape by cutting one side toward the die lip L described later and coupled to the first die 22a. In the example shown in FIG. 4, the spacer 24 may be configured to coat two lanes simultaneously by including a protrusion in the center. In this way, since the number of lanes can be adjusted by adjusting the number of protrusions of the spacer 24, multi-lane coating is possible by including the spacer 24 capable of coating two or more lanes.

The first die 22a and the second die 22b may be coupled in a vertical direction through a bolt C. At this time, the bolt C may pass through a part of the spacer 24 and couple the first die 22a and the second die 22b in a vertical direction.

In addition, in a state in which the first die 22a and the second die 22b are coupled, a die lip L may be formed at the tip of the slot die 22. Specifically, the die lip L may protrude a predetermined length from the tip of the slot die 22 in the discharging direction (X-axis direction) of the coating agent. Although not shown, in the slot die 22 described above, the die lip L may be disposed adjacent to the side surface of the coating roll. In this case, the slot die 22 can be called a horizontal die. Alternatively, in the slot die 22, the die lip L may be disposed adjacent to the lower portion of the coating roll. In this case, the slot die 22 can be called a vertical die.

This slot die 22 can spray the coating agent onto the substrate wound on the outer surface of the coating roll through the die lip L.

In the above embodiment, since the spacer 24 is interposed between the first die 22a and the second die 22b to define one slot, in this case, the slot die 22 may be a single slot die. Illustratively, the slot die 22 may further include one die and one spacer in addition to the first die 22a and the second die 22b. In this case, slot die 22 can be a dual slot die because a total of two slots can be defined by defining a slot between each two dies. In the aforementioned slot die 22, the number of slots can be easily changed in this way.

The aforementioned offset adjusting device 10 may include an offset measuring module 100 and an offset adjusting module 200.

The offset measuring module 100 may be configured to measure an offset between the spacer 24 and the die lip L of the slot die 22. As an example, the offset measuring module 100 may be a dial gauge. Such a dial gauge may be configured to compare distance differences between at least two or more objects.

The offset adjusting module 200 may be coupled to the spacer 24 and configured to align the spacer 24 according to the measured offset. At this time, the offset adjusting module 200 may be configured to align the spacer 24 in a state in which the aforementioned bolt C is removed from the slot die 22 and the coupling between the first die 22a and the second die 22b is released.

The offset measuring module 100 and the offset adjusting module 200 may be integrally provided in the slot die 22 described above. That is, the offset adjusting module 200 may align the spacer 24 such that the spaced distance between the die lip L and the end of the spacer 24 in the discharging direction (X-axis direction) of the coating agent is minimized, according to the offset between the die lip L of the slot die 22 and the spacer 24 measured by the offset measuring module 100.

According to this embodiment of the present disclosure, the offset between the die lip L of the slot die 22 and the spacer 24 can be quantitatively measured. Also, the offset can be measured in real time. In addition, since the spacer 24 can be aligned through the offset adjusting module 200 coupled to the spacer 24 according to the measured offset, there is an advantage in that the spacer 24 can be more precisely aligned. Accordingly, it is possible to minimize left and right alignment deviation of the spacer 24, and deviation of the left and right discharge width of the coating agent from the slot die 22 can be minimized. Therefore, through the unification of the left and right offsets, the pattern width of each lane can be made uniform when multi-lane coating is performed on the substrate.

Referring again to FIGS. 1 to 5, the offset adjusting device 10 may be configured to be coupled to one side of the slot die 22 located on the opposite side of the die lip L in the discharging direction of the coating agent. At this time, one side of the slot die 22 located on the opposite side of the die lip L may be configured flat.

That is, the offset measuring module 100 and the offset adjusting module 200 of the offset adjusting device 10 may be integrally provided on the opposite side of the die lip L at which the coating agent is ejected from the slot die 22 in the slot die 22. As an example, the offset measuring module 100 and the offset adjusting module 200 may be coupled to one side of the first die 22a.

According to this embodiment, since the spacer 24 can be aligned on the side opposite to the die lip L, the alignment of the spacer 24 is more stable than when the spacer 24 is aligned on the side of the die lip L protruding from the tip of the slot die 22.

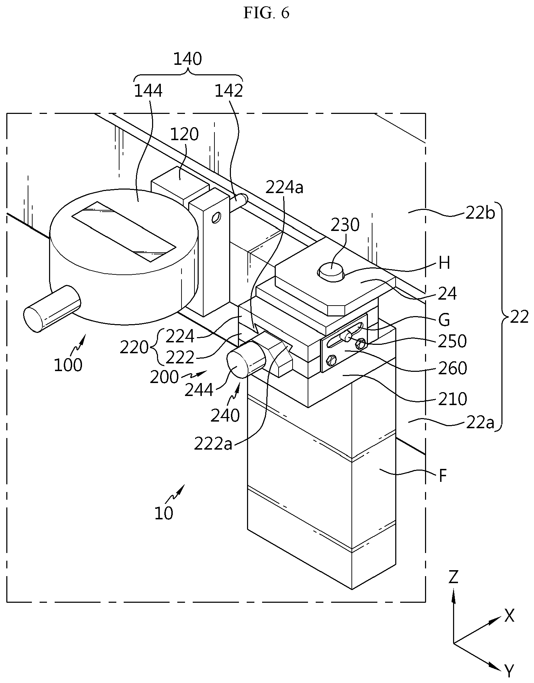

FIG. 6 is a view showing an offset adjusting device 10 provided in the coating apparatus 1 of FIG. 1 in detail.

Referring to FIGS. 1 to 6, the offset measuring module 100 may include a support bracket 120 and an indicator 140.

The support bracket 120 may be provided on the slot die 22. As an example, the support bracket 120 may be coupled to one side of the aforementioned first die 22a.

The indicator 140 may be supported by the support bracket 120 and contact the slot die 22 and the spacer 24 to measure an offset between the die lip L of the slot die 22 and the spacer 24.

Specifically, the indicator 140 may include a measurer 142 and a ruler 144.

The measurer 142 may be configured to contact the slot die 22 and the spacer 24 and compare a distance difference between the slot die 22 and the spacer 24 in the discharging direction of the coating agent. As an example, the measurer 142 may contact one side of the first die 22a and the spacer 24 in the discharging direction of the coating agent to measure an offset between the die lip L of the slot die 22 and the spacer 24.

The ruler 144 may display an offset between the spacer 24 and the die lip L of the slot die 22 measured by the measurer 142 externally.

Illustratively, in a state in which the measurer 142 is in contact with one side of the first die 22a as the reference surface, the scale of the ruler 144 may be set to '0'. Then, measurer 142 may contact the spacer 24.

In this state, when the scale of the ruler 144 is changed, it can be judged as an offset between the die lip L of the slot die 22 and the end of the spacer 24. That is, when a distance difference occurs in the discharging direction of the coating agent between one side of the first die 22a and the end of the spacer 24 located on the opposite side of the die lip L, the same distance difference can occur between the die lip L of the slot die 22 and the end of spacer 24. Therefore, the distance difference caused in the discharging direction of the coating agent between one side of the first die 22a and the end of the spacer 24 located on the opposite side of the die lip L can be judged as an offset between the die lip L of the slot die 22 and the spacer 24.

According to this embodiment, since the offset between the spacer 24 and the die lip L of the slot die 22 can be measured in a simple way, the time required for aligning the spacer 24 can be reduced.

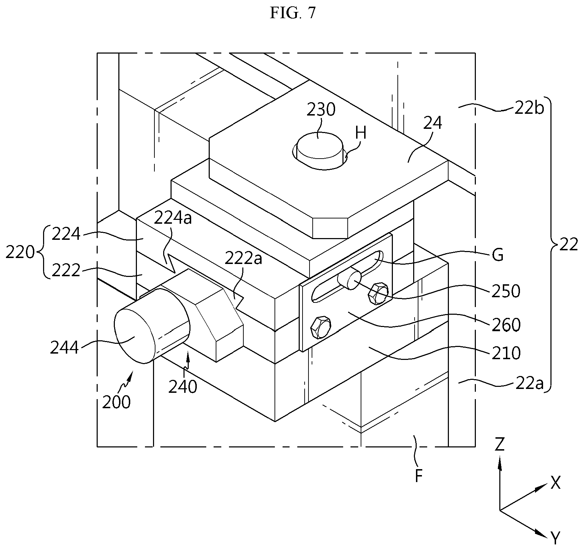

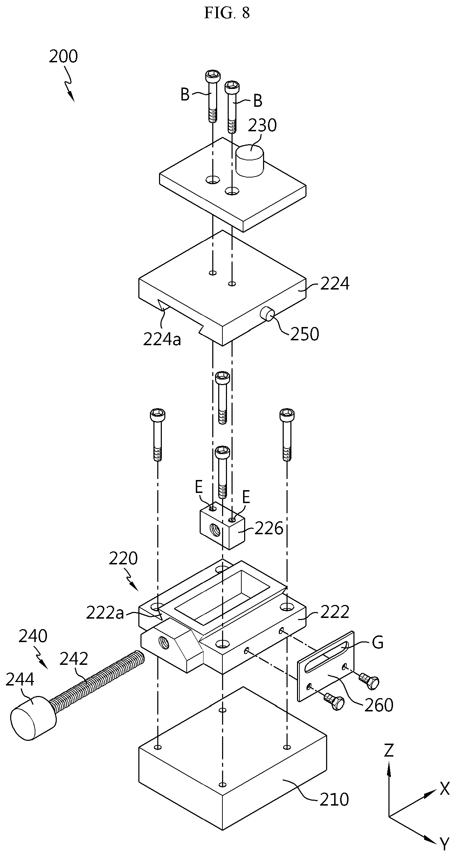

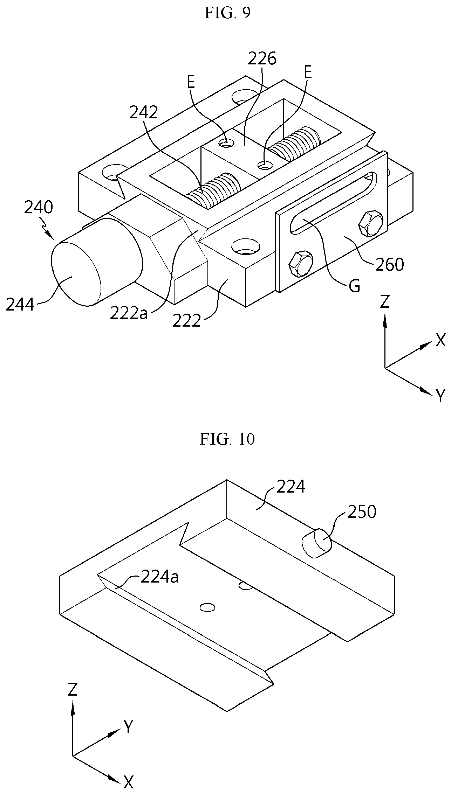

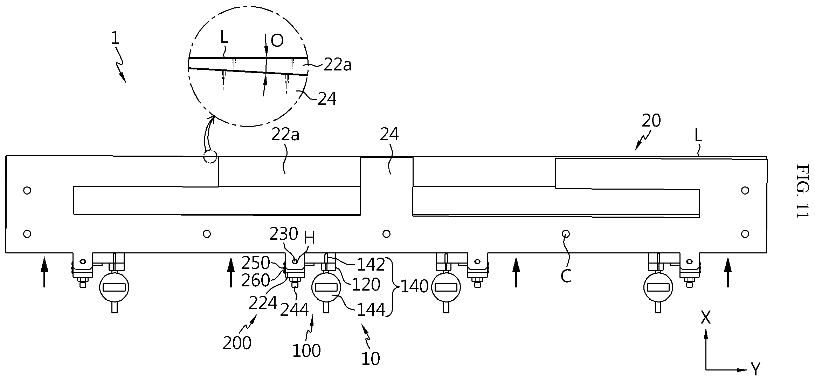

FIG. 7 is a view showing an offset adjusting module 200 provided in the offset adjusting device 10 of FIG. 6 in detail, FIG. 8 is an exploded perspective view of the offset adjusting module 200 of FIG. 7, FIG. 9 is a view showing a part of the offset adjusting module 200 of FIG. 7, FIG. 10 is a view showing another part of the offset adjusting module 200 of FIG. 7, and FIG. 11 is a view showing a state in which the offset adjusting module 200 of FIG. 7 aligns the spacer 24.

At this time, the offset between the die lip L of the slot die 22 and the spacer 24 in FIG. 11 is exemplarily denoted by reference symbol 'O'. In addition, in FIG. 11, illustration of the aforementioned second die 22b is omitted.

Referring to FIGS. 7 to 11, the offset adjusting module 200 may include a support unit 210 and a moving stage unit 220.

The support unit 210 may be provided in the slot die 22. As an example, the support unit 210 may be coupled to one side of the aforementioned first die 22a.

The moving stage unit 220 may be supported by the support unit 210. In addition, the moving stage unit 220 may be configured to align the spacer 24 according to the movement in the discharging direction (X-axis direction) of the coating agent. This moving stage unit 220 may be connected to the spacer 24.

In this way, since the moving stage unit 220, which can move in the discharging direction of the coating agent, aligns the spacer 24 while being coupled to the slot die 22 by the support unit 210, more stable alignment of the spacer 24 is possible.

In addition, the offset adjusting module 200 further includes an offset adjusting guide unit 230 and a control unit 240.

The offset adjusting guide unit 230 is provided in the moving stage unit 220 and may be coupled to the spacer 24. The offset adjusting guide unit 230 may be provided to extend in a vertical direction from the upper side of the moving stage unit 220.

The control unit 240 is configured to control driving of the moving stage unit 220 in the discharging direction of the coating agent. Specifically, the control unit 240 may be driven in the discharging direction (X-axis direction) of the coating agent to control the movement of the moving stage unit 220 in the discharging direction of the coating agent. As an example, the control unit 240 may be configured to control the movement of the moving stage unit 220 at intervals of approximately 0.001 mm, but is not limited thereto.

According to this embodiment, finer alignment of the spacer 24 in the discharging direction of the coating agent may be possible.

Referring back to FIGS. 7 to 11, the spacer 24 may include a hole H at a portion protruding outward from the slot die 22.

**In** addition, the offset adjusting guide unit 230 may be configured to be coupled to the hole H of the spacer 24. At this time, the offset adjusting guide unit 230 may be coupled to the hole H of the spacer 24 in a vertical direction. Also, the outer surface of the offset adjusting guide unit 230 may be provided in a shape corresponding to the hole H of the spacer 24.

According to this embodiment, since the moving stage unit 220 and the spacer 24 can be stably connected, more accurate alignment of the spacer 24 in the discharging direction of the coating agent may be possible.

**In** addition, since the spacer 24 is coupled to the offset adjusting guide unit 230 provided in the moving stage unit 220, even when the first die 22a and the second die 22b are coupled again after aligning the spacer 24, it is possible to minimize the misalignment of the aligned state of the spacer 24.

**In** addition, if it is confirmed that the spacer 24 is aligned to have a larger offset than the set offset, the offset can be easily adjusted by manipulation, so that the problem of coating width differences due to coating interface defects can be more easily solved.

For example, when electrode active material layer patterns are formed on both sides of the current collector, the width directional end of the electrode active material layer pattern formed on the upper surface of the current collector and the width directional end of the electrode active material layer pattern formed on the lower surface of the current collector are preferably aligned in the vertical direction. In addition, the difference between the ends in the width direction is managed as a quality index called mismatch. Mismatch is an item to be importantly managed since it is also related to the safety issue of the secondary battery. If the left and right offsets are different due to misalignment of the spacer 24, or if the spacer 24 is aligned to have a larger offset than the set offset, this mismatch intensifies, and it is difficult to manage the mismatch, especially when using a wide current collector that increases the number of lanes. According to the embodiment of the present disclosure, since left and right offset unification and setting offset management are easy, mismatch process capability can be improved. In addition, since the offset can be measured quantitatively and in real time, immediate management and response are possible, and measures such as dismantling of the die block and reassembly of the spacer are not required after coating is stopped, so condition adjustment loss can be reduced.

Referring back to FIGS. 7 to 11, the moving stage unit 220 includes a first block 222 , a second block 224 and a connection unit 226.

The first block 222 may be coupled to the support unit 210 described above. At this time, the first block 222 may be in a fixed state to the support unit 210.

The second block 224 is coupled to the top of the first block 222 and is configured to move in the discharging direction of the coating agent according to the driving of the control unit 240. In addition, an offset adjusting guide unit 230 may be provided on the second block 224. As shown in FIGS. 7 and 8, the second block 224 may be configured to move in the discharging direction of the coating agent according to the driving of the control unit 240 and align the spacer 24.

The connection unit 226 may be coupled to the control unit 240 to connect the second block 224 and the control unit 240. A part of the control unit 240 may be penetrated into the connection unit 226. In addition, a fastening hole E may be formed in the upper portion of the connection unit 226. At this time, the connection between the second block 224 and the connection unit 226 can be made by coupling the fastening member B penetrating the second block 224 in the vertical direction to the fastening hole E.

In detail, the control unit 240 may include a driving unit 242 and a handle unit 244.

The driving unit 242, as a part of the aforementioned control unit 240, may be disposed inside the first block 222 by extending in the discharging direction of the coating agent. Also, the driving unit 242 may be through-coupled to the connection unit 226. As an example, the driving unit 242 may be screwed to the connection unit 226.

The handle unit 244 is connected to the driving unit 242 and may rotate the driving unit 242 by an operator's manipulation to control the driving unit 242 to be driven in the discharging direction of the coating agent. In this case, while the driving unit 242 is driven in the discharging direction of the coating agent, the connection unit 226 connected to the driving unit 242 may be moved in the discharging direction of the coating agent. Accordingly, the second block 224 connected to the connection unit 226 may move in the discharging direction of the coating agent. As an example, the movement of the second block 224 may be adjusted at intervals of approximately 0.001 mm in the discharging direction of the coating agent.

As described above, since the spacer 24 can be aligned by the screw coupling between the control unit 240 and the moving stage unit 220, the spacer 24 can be more accurately aligned even when the operator's skill level is low. Therefore, it is possible to reduce alignment deviation of the spacer 24 according to the skill level of the operator and improve workability.

In particular, the second block 224 may include an insert portion 224a. As an example, the insert portion 224a may be formed to extend in the discharging direction (X-axis direction) of the coating agent.

This insert portion 224a may be formed to protrude inward in a horizontal direction (Y-axis direction) at a lower end and be inserted into the upper end of the first block 222.

Also, the first block 222 may include an indent portion 222a. As an example, the indent portion 222a may be formed to extend in the discharging direction (X-axis direction) of the coating agent.

The indent portion 222a may be formed by indenting inward in a horizontal direction (Y-axis direction) at the top of the first block 222 and may be configured to accommodate the insert portion 224a. That is, the indent portion 222a of the first block 222 and the insert portion 224a of the second block 224 may be formed to have shapes corresponding to each other.

Also, the indent portion 222a may be configured to guide the movement of the second block 224 in the discharging direction of the coating agent according to the driving of the control unit 240.

According to this embodiment, movement of the second block 224 in the discharging direction of the coating agent according to the driving of the control unit 240 can be made more stably. Accordingly, more stable and accurate alignment of the spacer 24 can be achieved.

Referring back to FIGS. 7 to 11, the offset adjusting module 200 may further include a protrusion member 250 and a movement limiting unit 260.

The protrusion member 250 may formed to protrude from the side of the second block 224. As an example, the protrusion member 250 may protrude from the side of the second block 224 in a horizontal direction (Y-axis direction).

The movement limiting unit 260 may have a guide hole G configured to guide the movement of the protrusion member 250 in the discharging direction of the coating agent. **In** this guide hole G, the protrusion member 250 may be inserted in a horizontal direction (Y-axis direction). Also, the movement limiting unit 260 may be fixed to the first block 222. As an example, the guide hole G may be configured to extend in the discharging direction (X-axis direction) of the coating agent.

**In** addition, the protrusion member 250 may be configured to limit the movement in the discharging direction of the coating agent by coming into contact with one end or the other end of the guide hole G. That is, the protrusion member 250 may limit the movement range of the second block 224 by coming into contact with one end or the other end of the guide hole G during the process of moving the second block 224 in the discharging direction of the coating agent.

Accordingly, it is possible to prevent the spacer 24 from being damaged due to excessive movement of the second block 224 connected to the spacer 24 through the offset adjusting guide unit 230 in the discharging direction of the coating agent.

Referring back to FIGS. 1 to 4, the offset adjusting device 10 may further include a fixing member F.

The fixing member F may be configured to fix the offset adjusting device 10 to one side of the slot die 22.

Specifically, the fixing member F may fix the offset measuring module 100 and the offset adjusting module 200 to the opposite side of the die lip L in the slot die 22. As an example, the fixing member F may be coupled to one side of the first die 22a.

More specifically, the fixing member F may fix the support bracket 120 of the offset measuring module 100 and the support unit 210 of the offset adjusting module 200 to one side of the first die 22a. At this time, the fixing member F may support the lower portions of the support bracket 120 and the support unit 210.

Illustratively, the fixing member F may be configured to include a magnetic material so as to be detachable from the slot die 22. At this time, the support bracket 120 and the support unit 210 may be configured to include a metal material.

According to this embodiment, the offset adjusting device 10 can be stably fixed to the slot die 22 during the alignment process of the spacer 24. Accordingly, it is possible to minimize the influence of the vibration of the working space where the slot die 22 is disposed, and more stably align the spacer 24.

Referring back to FIGS. 1 to 4, a plurality of offset adjusting devices 10 may be provided in the longitudinal direction (Y-axis direction) of the slot die 22.

According to this configuration, since the spacers 24 can be aligned at a plurality of positions in the longitudinal direction of the slot die 22, the spacers 24 can be aligned more quickly and accurately.

In addition, since the spacers 24 can be coupled to the offset adjusting guide unit 230 at a plurality of positions in the longitudinal direction of the slot die 22, even when the first die 22a and the second die 22b are coupled again after the spacers 24 are aligned, the misalignment of the aligned state of the spacers 24 can be further minimized.

The aforementioned plurality of offset adjusting devices 10 may be provided on both sides of the center in the longitudinal direction of the slot die 22 along the longitudinal direction of the slot die 22.

According to this configuration, since the spacer 24 can be aligned simultaneously on both sides based on the center in the longitudinal direction of the slot die 22, the left-right alignment deviation of the spacer 24 can be further minimized.

In particular, the plurality of offset adjusting devices 10 may be provided symmetrically in the longitudinal direction of the slot die 22 based on the center in the longitudinal direction of the slot die 22.

According to this configuration, the left-right alignment deviation of the spacer 24 can be further minimized.

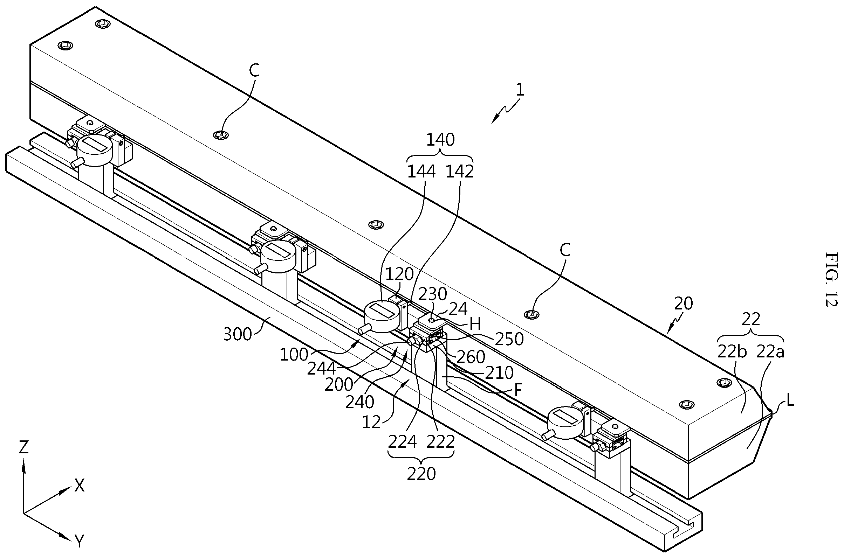

FIG. 12 is a diagram showing an offset adjusting device 12 according to another embodiment of the present disclosure.

Since the offset adjusting device 12 according to the present embodiment is similar to the offset adjusting device 10 of the previous embodiment, redundant description of components substantially the same as or similar to those of the previous embodiment will be omitted, and differences from the previous embodiment will be described below.

Referring to FIG. 12, a plurality of offset adjusting devices 12 may be provided in the longitudinal direction of the slot die 22. Also, the distance between the plurality of offset adjusting devices 12 may be adjusted from each other. That is, the interval between the plurality of offset adjusting devices 12 may be adjusted from each other in the longitudinal direction (Y-axis direction) of the slot die 22.

Specifically, the offset adjusting device 12 may include a spacing control module 300. As an example, the spacing control module 300 may be a linear motion (LM) guide and may be configured to extend in the longitudinal direction of the slot die 22.

This spacing control module 300 may be disposed on the opposite side of the die lip L in the slot die 22. As an example, the spacing control module 300 may be disposed adjacent to one side of the first die 22a.

In addition, the spacing control module 300 may be configured to guide the movement of the offset measuring module 100 and the offset adjusting module 200 in the longitudinal direction of the slot die 22. Specifically, the fixing member F fixing the offset measuring module 100 and the offset adjusting module 200 may be configured to move on the spacing control module 300.

According to this configuration, since the offset adjusting device 12 can be easily moved to a position where the spacer 24 is out of alignment, it is possible to more easily align the spacer 24.

As described above, according to the embodiment of the present disclosure, the offset between the die lip L of the slot die 22 and the spacer 24 can be quantitatively measured. Also, the offset can be measured in real time. In addition, since the spacer 24 can be aligned through the offset adjusting module 200 coupled to the spacer 24 according to the measured offset, there is an advantage in that the spacer 24 can be more precisely aligned. Accordingly, it is possible to minimize left and right alignment deviation of the spacer 24, and deviation of the left and right discharge width of the coating agent from the slot die 22 can be minimized.

In addition, since the offset adjusting module 200 and the spacer 24 can be stably connected, more accurate alignment of the spacer 24 in the discharging direction of the coating agent can be possible.

In addition, since the spacer 24 is connected to the offset adjusting module 200, even when the first die 22a and the second die 22b are coupled again after aligning the spacer 24, the misalignment of the aligned state of the spacer 24 can be minimized.

The present disclosure has been described in detail. However, it should be understood that the detailed description and specific examples, while indicating preferred embodiments of the invention, are given by way of illustration only, since various changes and modifications within the scope of the invention will become apparent to those skilled in the art from this detailed description. The invention is defined by the appended claims.

On the other hand, in the present disclosure, terms indicating directions such as up, down, left, right, front, and back are used, but these terms are only for convenience of explanation, and it is obvious to those skilled in the art of the present disclosure that the terms may vary depending on the location of the target object or the location of the observer.

## Claims

1. An offset adjusting device (10), which is configured for aligning a spacer (24) provided in a slot die (22) of a coating agent applying device (20) configured to apply a coating agent to a substrate, the offset adjusting device (10) comprising:
an offset measuring module (100) configured to measure an offset between a die lip (L) of the slot die (22) and the spacer (24); and
an offset adjusting module (200) coupled to the spacer (24),
whereby the offset adjusting module (200) is configured to align the spacer (24) according to the measured offset,
wherein the offset adjusting module (200) includes:
a support unit (210) provided on the slot die (22);
a moving stage unit (220) supported by the support unit (210) and configured to align the spacer (24) according to the movement in a discharging direction of the coating agent,
**characterized in that** the offset adjusting module further includes:
an offset adjusting guide unit (230) provided on the moving stage unit (220) and coupled to the spacer (24); and
a control unit (240) configured to control the driving of the moving stage unit (220) in the discharging direction of the coating agent,
and **in that** the moving stage unit (220) includes:
a first block (222) coupled to the support unit (210);
a second block (224) coupled to an upper portion of the first block (222) and configured to move in the discharging direction of the coating agent according to driving of the control unit (240); and
a connection unit (226) coupled to the control unit (240) and configured to connect the second block (224) and the control unit (240), and
wherein the offset adjusting guide unit (230) is provided on an upper portion of the second block (224).

2. The offset adjusting device (10) according to claim 1, wherein the offset adjusting device (10) is configured to be coupled to one side of the slot die (22) located on the opposite side of the die lip (L) in a discharging direction of the coating agent.

3. The offset adjusting device according to claim 1, wherein the offset measuring module (100) includes:
a support bracket (120) provided to the slot die (22); and
an indicator (140) supported by the support bracket (120) and configured to measure the offset by contacting the slot die (22) and the spacer (24).

4. The offset adjusting device according to claim 1,
wherein the spacer (24) includes a hole (H) in a portion formed by protruding outward from the slot die (22), and
wherein the offset adjusting guide unit (230) is configured to be coupled to the hole (H) of the spacer (24).

5. The offset adjusting device (10) according to claim 1,
wherein the second block (224) includes an insert portion formed at a bottom to protrude inward in a horizontal direction and configured to be inserted into a top of the first block (222),
wherein the first block (222) includes an indent portion (222a) formed at a top by indenting inward in the horizontal direction and configured to accommodate the insert portion, and
wherein the indent portion (222a) is configured to guide the movement of the second block (224) in the discharging direction of the coating agent according to the driving of the control unit (240).

6. The offset adjusting device (10) according to claim 1, wherein the offset adjusting module (200) further includes:
a protrusion member (250) formed to protrude from the side of the second block (224); and
a movement limiting unit (260) having a guide hole (G) configured to guide the movement of the protrusion member (250) in the discharging direction of the coating agent and fixed to the first block (222), and
wherein the protrusion member (250) is configured to limit the movement in the discharging direction of the coating agent by coming into contact with one end or the other end of the guide hole (G).

7. The offset adjusting device (10) according to claim 2, further comprising a fixing member (F) configured to fix the offset adjusting device (10) to one side of the slot die (22).

8. The offset adjusting device (10) according to claim 1,
wherein the offset adjusting device (10) is provided in plurality in a longitudinal direction of the slot die (22).

9. The offset adjusting device (10) according to claim 8,
wherein the plurality of offset adjusting devices (10) are provided on both sides of the center in the longitudinal direction of the slot die (22) along the longitudinal direction of the slot die (22).

10. The offset adjusting device (10) according to claim 9,
wherein the plurality of offset adjusting devices (10) are provided symmetrically in the longitudinal direction of the slot die (22) based on the center in the longitudinal direction of the slot die (22).

11. The offset adjusting device (10) according to claim 8,
wherein the distance between the plurality of offset adjusting devices (10) is configured to be adjustable from each other.

12. A coating apparatus, comprising:
an offset adjusting device (10) according to any one of claims 1 to 11; and
a coating agent applying device (20) configured to apply a coating agent to a substrate.

## Patentansprüche

1. Offset-Einstellvorrichtung (10), welche zum Ausrichten eines Abstandselements (24) eingerichtet ist, welches in einer Schlitzdüse (22) einer Beschichtungsmittel-Aufbringvorrichtung (20) bereitgestellt ist, welche dazu eingerichtet ist, ein Beschichtungsmittel auf ein Substrat aufzubringen, wobei die Offset-Einstellvorrichtung (10) umfasst:
ein Offset-Messmodul (100), welches dazu eingerichtet ist, einen Offset zwischen einer Düsenlippe (L) der Schlitzdüse (22) und dem Abstandselement (24) zu messen; und
ein Offset-Einstellmodul (200), welches mit dem Abstandselement (24) gekoppelt ist,
wobei das Offset-Einstellmodul (200) dazu eingerichtet ist, das Abstandselement (24) gemäß dem gemessenen Offset auszurichten,
wobei das Offset-Einstellmodul (200) umfasst:
eine Trageeinheit (210), welche an der Schlitzdüse (22) bereitgestellt ist;
eine sich bewegende Stufeneinheit (220), welche von der Trageeinheit (210) getragen und dazu eingerichtet ist, das Abstandselement (24) gemäß der Bewegung in einer Abgaberichtung des Beschichtungsmittels auszurichten, **dadurch gekennzeichnet, dass** das Offset-Einstellmodul ferner umfasst:
eine Offset-Einstellführungseinheit (230), welche an der sich bewegenden Stufeneinheit (220) bereitgestellt und mit dem Abstandselement (24) gekoppelt ist; und
eine Steuereinheit (240), welche dazu eingerichtet ist, den Antrieb der sich bewegenden Stufeneinheit (220) in der Abgaberichtung des Beschichtungsmittels zu steuern,
und dadurch, dass die sich bewegende Stufeneinheit (220) umfasst:
einen ersten Block (222), welcher mit der Trageeinheit (210) gekoppelt ist;
einen zweiten Block (224), welcher mit einem oberen Abschnitt des ersten Blocks (222) gekoppelt und dazu eingerichtet ist, sich in der Abgaberichtung des Beschichtungsmittels gemäß einem Antrieb der Steuereinheit (240) zu bewegen; und
eine Verbindungseinheit (226), welche mit der Steuereinheit (240) gekoppelt und
dazu eingerichtet ist, den zweiten Block (224) und die Steuereinheit (240) zu verbinden, und
wobei die Offset-Einstellführungseinheit (230) an einem oberen Abschnitt des zweiten Blocks (224) bereitgestellt ist.

2. Offset-Einstellvorrichtung (10) nach Anspruch 1, wobei die Offset-Einstellvorrichtung (10) dazu eingerichtet ist, mit einer Seite der Schlitzdüse (22) gekoppelt zu sein, welche an der gegenüberliegenden Seite der Düsenlippe (L) in einer Abgaberichtung des Beschichtungsmittels angeordnet ist.

3. Offset-Einstellvorrichtung nach Anspruch 1, wobei das Offset-Messmodul (100) umfasst:
eine Trageklammer (120), welche an der Schlitzdüse (22) bereitgestellt ist; und
einen Indikator (140), welcher von der Trageklammer (120) getragen und dazu eingerichtet ist, den Offset durch Kontaktieren der Schlitzdüse (22) und des Abstandselements (24) zu messen.

4. Offset-Einstellvorrichtung nach Anspruch 1,
wobei das Abstandselement (24) ein Loch (H) in einem Abschnitt umfasst, welcher durch Vorstehen nach außen von der Schlitzdüse (22) gebildet ist, und
wobei die Offset-Einstellführungseinheit (230) dazu eingerichtet ist, mit dem Loch (H) des Abstandselements (24) gekoppelt zu sein.

5. Offset-Einstellvorrichtung (10) nach Anspruch 1,
wobei der zweite Block (224) einen Einsatzabschnitt umfasst, welcher an einer Unterseite gebildet ist, um nach innen in einer horizontalen Richtung vorzustehen, und dazu eingerichtet ist, in eine Oberseite des ersten Blocks (222) eingesetzt zu sein,
wobei der erste Block (222) einen Einbuchtungsabschnitt (222a) umfasst, welcher an einer Oberseite durch Einbuchten nach innen in der horizontalen Richtung gebildet und dazu eingerichtet ist, den Einsatzabschnitt aufzunehmen, und wobei der Einbuchtungsabschnitt (222a) dazu eingerichtet ist, die Bewegung des zweiten Blocks (224) in der Abgaberichtung des Beschichtungsmittels gemäß dem Antrieb der Steuereinheit (240) zu führen.

6. Offset-Einstellvorrichtung (10) nach Anspruch 1, wobei das Offset-Einstellmodul (200) ferner umfasst:
ein Vorstandselement (250), welches dazu gebildet ist, von der Seite des zweiten Blocks (224) vorzustehen; und
eine Bewegung-Begrenzungseinheit (260), welche ein Führungsloch (G) aufweist, welches dazu eingerichtet ist, die Bewegung des Vorstandselements (250) in der Abgaberichtung des Beschichtungsmittels zu führen, und an dem ersten Block (222) fixiert ist, und
wobei das Vorstandselement (250) dazu eingerichtet ist, die Bewegung in der Abgaberichtung des Beschichtungsmittels durch in-Kontakt-Kommen mit einem Ende oder dem anderen Ende des Führungslochs (G) zu begrenzen.

7. Offset-Einstellvorrichtung (10) nach Anspruch 2, ferner umfassend ein Fixierungselement (F), welches dazu eingerichtet ist, die Offset-Einstellvorrichtung (10) an einer Seite der Schlitzdüse (22) zu fixieren.

8. Offset-Einstellvorrichtung (10) nach Anspruch 1,
wobei die Offset-Einstellvorrichtung (10) in einer Mehrzahl in einer longitudinalen Richtung der Schlitzdüse (22) bereitgestellt ist.

9. Offset-Einstellvorrichtung (10) nach Anspruch 8,
wobei die Mehrzahl von Offset-Einstellvorrichtungen (10) an beiden Seiten der Mitte in der longitudinalen Richtung der Schlitzdüse (22) entlang der longitudinalen Richtung der Schlitzdüse (22) bereitgestellt sind.

10. Offset-Einstellvorrichtung (10) nach Anspruch 9,
wobei die Mehrzahl von Offset-Einstellvorrichtungen (10) symmetrisch in der longitudinalen Richtung der Schlitzdüse (22) auf Grundlage der Mitte in der longitudinalen Richtung der Schlitzdüse (22) bereitgestellt sind.

11. Offset-Einstellvorrichtung (10) nach Anspruch 8,
wobei die Distanz zwischen der Mehrzahl von Offset-Einstellvorrichtungen (10) dazu eingerichtet ist, voneinander einstellbar zu sein.

12. Beschichtungsvorrichtung, umfassend:
eine Offset-Einstellvorrichtung (10) nach einem der Ansprüche 1 bis 11; und
eine Beschichtungsmittel-Aufbringungsvorrichtung (20), welche dazu eingerichtet ist, ein Beschichtungsmittel auf ein Substrat aufzubringen.

## Revendications

1. Dispositif de réglage de décalage (10), qui est configuré pour aligner un espaceur (24) disposé dans une filière à fente (22) d'un dispositif d'application d'agent de revêtement (20) configuré pour appliquer un agent de revêtement sur un substrat, le dispositif de réglage de décalage (10) comprenant :
un module de mesure de décalage (100) configuré pour mesurer un décalage entre une lèvre de filière (L) de la filière à fente (22) et l'espaceur (24) ; et
un module de réglage de décalage (200) couplé à l'espaceur (24), selon lequel le module de réglage de décalage (200) est configuré pour aligner l'espaceur (24) en fonction du décalage mesuré,
dans lequel le module de réglage de décalage (200) inclut :
une unité de support (210) disposée sur la filière à fente (22) ;
une unité de plateau mobile (220) soutenue par l'unité de support (210) et configurée pour aligner l'espaceur (24) en fonction du mouvement dans une direction d'évacuation de l'agent de revêtement,
**caractérisé en ce que** le module de réglage de décalage inclut en outre :
une unité guide de réglage de décalage (230) disposée sur l'unité de plateau mobile (220) et couplée à l'espaceur (24) ; et
une unité de commande (240) configurée pour commander l'entraînement de l'unité de plateau mobile (220) dans la direction d'évacuation de l'agent de revêtement, et **en ce que** l'unité de plateau mobile (220) comprend :
un premier bloc (222) couplé à l'unité de support (210) ;
un second bloc (224) couplé à une partie supérieure du premier bloc (222) et configuré pour se déplacer dans la direction d'évacuation de l'agent de revêtement selon l'entraînement de l'unité de commande (240) ; et
une unité de raccordement (226) couplée à l'unité de commande (240) et configurée pour raccorder le second bloc (224) et l'unité de commande (240), et
dans lequel l'unité guide de réglage de décalage (230) est disposée sur une partie supérieure du second bloc (224).

2. Dispositif de réglage de décalage (10) selon la revendication 1, dans lequel le dispositif de réglage de décalage (10) est configuré pour être couplé à un côté de la filière à fente (22) situé du côté opposé de la lèvre de filière (L) dans une direction d'évacuation de l'agent de revêtement.

3. Dispositif de réglage de décalage selon la revendication 1, dans lequel le module de mesure de décalage (100) inclut :
une patte de support (120) disposée sur la filière à fente (22) ; et
un indicateur (140) supporté par la patte de support (120) et configuré pour mesurer le décalage par mise en contact de la filière à fente (22) et de l'espaceur (24).

4. Dispositif de réglage de décalage selon la revendication 1,
dans lequel l'espaceur (24) inclut un trou (H) dans une partie formée de manière à faire saillie vers l'extérieur à partir de la filière à fente (22), et
dans lequel l'unité guide de réglage de décalage (230) est configurée pour être couplée au trou (H) de l'espaceur (24).

5. Dispositif de réglage de décalage (10) selon la revendication 1,
dans lequel le second bloc (224) inclut une partie d'insertion formée au niveau d'une partie inférieure destinée à faire saillie vers l'intérieur dans une direction horizontale et configurée pour être insérée dans une partie supérieure du premier bloc (222), dans lequel le premier bloc (222) inclut une partie d'indentation (222a) formée au niveau d'une partie supérieure par indentation vers l'intérieur dans la direction horizontale et configurée pour accueillir la partie d'insert, et
dans lequel la partie d'indentation (222a) est configurée pour guider le mouvement du second bloc (224) dans la direction d'évacuation de l'agent de revêtement selon l'entraînement de l'unité de commande (240).

6. Dispositif de réglage de décalage (10) selon la revendication 1, dans lequel le module de réglage de décalage (200) inclut en outre :
un organe en saillie (250) formé pour faire saillie depuis le côté du second bloc (224) ; et
une unité de limitation de mouvement (260) présentant un trou de guidage (G) configuré pour guider le mouvement de l'organe en saillie (250) dans la direction d'évacuation de l'agent de revêtement et fixé au premier bloc (222), et
dans lequel l'organe en saillie (250) est configuré pour limiter le mouvement dans la direction d'évacuation de l'agent de revêtement en entrant en contact avec une extrémité ou l'autre extrémité du trou de guidage (G).

7. Dispositif de réglage de décalage (10) selon la revendication 2, comprenant en outre un organe de fixation (F) configuré pour fixer le dispositif de réglage de décalage (10) à un côté de la filière à fente (22).

8. Dispositif de réglage de décalage (10) selon la revendication 1,
dans lequel le dispositif de réglage de décalage (10) est présent en une pluralité dans une direction longitudinale de la filière à fente (22).

9. Dispositif de réglage de décalage (10) selon la revendication 8,
dans lequel la pluralité de dispositifs de réglage de décalage (10) sont disposés des deux côtés du centre dans la direction longitudinale de la filière à fente (22) le long de la direction longitudinale de la filière à fente (22).

10. Dispositif de réglage de décalage (10) selon la revendication 9,
dans lequel la pluralité de dispositifs de réglage de décalage (10) est disposée symétriquement dans la direction longitudinale de la filière à fente (22) par rapport au centre dans la direction longitudinale de la filière à fente (22).

11. Dispositif de réglage de décalage (10) selon la revendication 8,
dans lequel la distance entre la pluralité de dispositifs de réglage de décalage (10) est configurée pour leur permettre d'être réglables les uns par rapport aux autres.

12. Appareil de revêtement, comprenant :
un dispositif de réglage de décalage (10) selon l'une quelconque des revendications 1 à 11 ; et
un dispositif d'application d'agent de revêtement (20) configuré pour appliquer un agent de revêtement sur un substrat.
